**Europäisches Patentamt**

**European Patent Office**

**Office européen des brevets**

(11) Veröffentlichungsnummer: **0 406 950 A1**

# (12) EUROPÄISCHE PATENTANMELDUNG

(21) Anmeldenummer: 90201715.1

(22) Anmeldetag: 28.06.90

(51) Int. Cl.⁵: **G11B 17/22**

(30) Priorität: 04.07.89 NL 8901699

(43) Veröffentlichungstag der Anmeldung:
**09.01.91 Patentblatt 91/02**

(84) Benannte Vertragsstaaten:
**DE FR GB IT**

(71) Anmelder: **N.V. Philips' Gloeilampenfabrieken**
**Groenewoudseweg 1**
**NL-5621 BA Eindhoven(NL)**

(72) Erfinder: **van Heusden, Omar Prosper Leo**
**Pieter**
**c/o INT. OCTROOIBUREAU B.V., Prof.**
**Holstlaan 6**
**NL-5656 AA Eindhoven(NL)**
Erfinder: **Verheyen, Jozef Hendricus Maria**
**Robertus**
**c/o INT. OCTROOIBUREAU B.V., Prof.**
**Holstlaan 6**
**NL-5656 AA Eindhoven(NL)**

(74) Vertreter: **Schrijnemaekers, Hubert Joannes**
**Maria et al**
**Internationaal Octrooibureau B.V. Prof.**
**Holstlaan 6**
**NL-5656 AA Eindhoven(NL)**

(54) **Plattenspieler.**

(57) Plattenspieler, der die folgenden Elemente aufweist,
- ein Gehäuse (1) mit einem ortsfesten Rahmen (13),
- eine Abtasteinrichtung (3),
- einen scheibenförmigen Plattenträger (5)
- eine Ladevorrichtung und
- eine Positionierungseinrichtung.

Die Abtasteinrichtung ist gemeint zum Einschreiben und/oder Auslesen von Informationsplatten, insbesondere optischen oder magnetooptischen Platten, und ist mit einem um eine Drehungsachse drehbaren Plattenteller mit einer Auflegefläche zum Tragen einer in einer Abtastlage befindlichen Informationsplatte (21) versehen. Der scheibenförmige um eine Drehungsachse (5a) drehbare Plattenträger ist mit einer Anzahl fluchtender zum Tragen einer Informationsplatte eingerichteter Tragflächen (5b) versehen. Die Ladevorrichtung weist eine durch eine Öffnung (11) in dem Gehäuse verschiebbare, mit einer Auflegefläche (7a) versehene Lade (7) zum Hinein- bzw. Herausfahren von Informationsplatten auf. Die Positionierungseinrichtung ist mit einer elektrischen Antriebseinheit zum gegenseitigen Positionieren der Abtasteinrichtung und des Plattenträgers zum in die Abtastlage Bringen von Informationsplatten versehen. Der genannte Plattenträger ist in dem ortsfesten

Rahmen und ständig innerhalb des Gehäuses gelagert, wobei in einer eingefahrenen Lage der Lade die Tragflächen des Plattenträgers und die Auflegefläche der Lade in einer Richtung parallel zu der Drehungsachse des Plattenträgers gegenüber einander verschiebbar sind.

FIG. 1

## PLATTENSPIELER

Die Erfindung bezieht sich auf einen Plattenspieler, der die folgenden Elemente aufweist,
- ein Gehäuse mit einem ortsfesten Rahmen,
- eine Abtasteinrichtung zum Einschreiben und/oder Auslesen von Informationsplatten, insbesondere optischen oder magnetooptischen Platten, wobei diese Einrichtung mit einem um eine Drehungsachse drehbaren Plattenteller mit einer Auflegefläche zum Tragen einer in einer Abtastlage befindlichen Informationsplatte versehen ist,
- einen scheibenförmigen um eine Drehungsachse drehbaren Plattenträger mit einer Anzahl zum Tragen einer Informationsplatte eingerichteter Tragflächen,
- eine Ladevorrichtung mit einer durch eine Öffnung in dem Gehäuse verschiebbaren mit einer Auflegefläche versehenen Lade zum Hinein- bzw. Herausfahren von Informationsplatten,
- eine Positionierungseinrichtung mit einer elektrischen Antriebseinheit zum gegenseitigen Positionieren der Abtasteinrichtung und des Plattenträgers zum in die Abtastlage Bringen von Informationsplatten.

Aus der Deutschen Offenlegungsschrift DE 37 05 007 (durch Bezeichnung als hierin aufgenommen betrachtet) ist ein Plattenspieler bekannt, der mit einem horizontal in und aus den Gehäuse verschiebbaren Führungstisch versehen ist, in dem ein Plattenträger mit einer Anzahl Tragflächen drehbar gelagert ist. Der Führungstisch ist mit einer Antriebsvorrichtung zum in Drehung Versetzen und Positionieren des Plattenträgers versehen. In dem Gehäuse befindet sich eine mit einem Plattenteller versehene Abtasteinrichtung zum Abtasten einer optischen Platte. Der bekannte Plattenspieler ist weiterhin mit einer Ladevorrichtung zum Hinein- bzw. Herausfahren des Führungstisches und des Plattenträgers versehen. Wenn der hineingefahrene Plattenträger sich in der gewünschten Abspiellage befindet, kann die optische Abtasteinrichtung vertikal verschoben werden, wobei der Plattenteller die abzutastende Platte von dem Plattenträger abhebt und die Platte zwischen dem Plattenteller und einem Plattendrücker festgeklemmt wird. Beim Abtasten einer Platte läßt sich der Führungstisch nicht verschieben.

Ein Nachteil des bekannten Plattenspielers sind u.a. die relativ großen Abmessungen des Führungstisches, wobei das Gehäuse zwangsläufig mit einer großen Voreröffnung versehen ist, durch die der Führungstisch verschiebbar ist. Ein weiterer Nachteil des bekannten Plattenspielers ist, daß dieser keine Möglichkeiten bietet, beim Abtasten einer optischen Platte andere Platten zu wechseln.

Die Erfindung hat u.a. zur Aufgabe, den eingangs erwähnten Plattenspieler derart zu ändern, daß zum Hinein- und Herausfahren einer Anzahl Informationsplatten nur eine kleine verschiebbare Lade erforderlich ist und daß eine Möglichkeit geschaffen wird, beim Abtasten einer Informationsplatte eine oder mehrere Informationsplatten zu wechseln.

Der erfindungsgemäße Plattenspieler weist dazu das Kennzeichen auf, daß der Plattenträger in dem ortsfesten Rahmen und ständig innerhalb des Gehäuses gelagert ist, wobei in einer eingefahrenen Lage der Lade die Tragflächen des Plattenträgers und die Auflegefläche der Lade in einer Richtung parallel zu der Drehungsachse des Plattenträgers gegenüber einander verschiebbar sind. In dem erfindungsgemäßen Plattenspieler ist der Plattenträger daher um eine gegenüber dem ortsfesten Rahmen feste Drehungsachse drehbar. Dadurch ist nur zum Hinein- und Herausfahren der Informationsplatten eine Schiebelade einer einfachen Konstruktion erforderlich. Durch die konstruktive Entkupplung von Lade und Plattenträger ist es möglich, beim Abtasten einer Informationsplatte mindestens eine Informationsplatte in das Gehäuse hinein- bzw. aus demselben herauszufahren. Einen weiteren Vorteil des erfindungsgemäßen Plattenspielers bieten die relativ einfachen mechanischen Positionierungsmöglichkeiten des um eine feste Drehungsachse drehbaren Plattenträgers.

Eine Ausführungsform des erfindungsgemäßen Plattenspielers weist das Kennzeichen auf, daß der Plattenspieler längs der Drehungsachse zwischen einer ersten Ebene, in der gemäß der Drehungsachse und in der Richtung der Tragflächen gesehen, die Tragflächen des Plattenträgers sich hinter der Auflegefläche der Lade befinden, und einer zweiten Ebene, in der, in derselben Richtung gesehen, die Tragflächen des Plattenträgers sich vor der Auflegefläche der Lade befinden, verschiebbar ist. Durch die Verschiebung des Plattenträgers längs der Drehungsachse kann auf einfache Weise eine auf der Auflegefläche der eingefahrenen Lade liegende Informationsplatte einer der Tragflächen des Plattenträgers zugeführt werden. Auch kann auf diese Weise eine auf einer der Tragflächen des Plattenträgers liegende Informationsplatte der Auflegefläche der Lade zugeführt werden.

Eine andere Ausführungsform des erfindungsgemäßen Plattenspielers weist das Kennzeichen auf, daß der Plattenträger längs der Drehungsachse zwischen einer dritten Ebene, in der, gemäß der Drehungsachse und in der Richtung der Tragflächen gesehen, die Tragflächen des Plattenträgers sich vor der Tragfläche des Plattentellers befinden, und einer vierten Ebene, in der, in derselben Richtung gesehen, die Tragflächen des Plattenträgers sich hinter der Tragfläche des Plattentellers befinden, verschiebbar ist. Durch Verschiebung des Plattenträgers längs der Drehungsachse kann eine Informationsplatte auf den Plattenteller gelegt bzw. demselben entnommen werden.

Selbstverständlich soll beim Zusammenarbeiten des Plattenträgers mit der Lade und beim Zusammenarbeiten des Plattenträgers mit dem Plattenteller eine der Tragflächen sich in der richtigen Lage gegenüber der Auflegefläche der Lade bzw. der Tragfläche des Plattentellers befinden.

In einer praktischen Ausführungsform werden die erste mit der vierten Ebene und die zweite mit der dritten Ebene zusammenfallen.

Eine weitere Ausführungsform weist das Kennzeichen auf, daß zur gegenüber dem Rahmen parallelen Verschiebung des Plattenträgers ein durch eine elektrische Einheit der Positionierungseinrichtung antreibbarer Hebemechanismus vorhanden ist. Diese Ausführungsform weist weiterhin vorzugsweise das Kennzeichen auf, daß in einer ersten Drehrichtung der elektrischen Einheit der Plattenträger in einer ersten sich parallel zu der Drehungsachse erstreckenden Richtung sowie in einer ersten Drehrichtung verschiebbar ist, und in einer zweiten Drehrichtung der elektrischen Einheit der Plattenträger in einer zweiten sich parallel zu der Drehungsachse erstreckenden Richtung verschiebbar ist. Auf diese Weise ist eine einfach jedoch effektiv wirkende Positionierungseinrichtung möglich, mit der schnell und zweckmäßig eine auf dem Plattenträger liegende Informationsplatte dem Plattenteller oder der Lade zugeführt werden kann.

Eine Ausführungsform des erfindungsgemäßen Plattenspielers, bei der der Plattenteller verschiebbar ist längs der Drehungsachse zwischen einer ersten Lage, in der, gesehen in der Richtung der Drehungsachse sowie in Richtung der Tragfläche des Plattentellers, die Tragfläche des Plattentellers sich hinter den Tragflächen des Plattenträgers befindet, und einer zweiten Lage, in der, in derselben Richtung gesehen, die Tragfläche des Plattentellers sich vor den Auflegeflächen befindet, weist das Kennzeichen auf, daß die Lade der Ladevorrichtung mit einer, mindestens in einer Richtung quer zu der Auflegefläche der Lade verschiebbaren, die Auflegefläche aufweisenden Bühne versehen ist, wobei diese Bühne in einer herausgefahrenen Lage der Lade eine erste Lage einnimmt, in der, in Richtung der Drehungsachse des Plattenträgers sowie in der Richtung der Tragflächen gesehen, die Auflegefläche der Lade sich in einer vor den Tragflächen liegenden Ebene befindet und wobei die Bühne in der hineingefahrenen Lage der Lade eine zweite Lage einnimmt, in der, in Richtung der Drehungsachse des Plattenträgers und in der Richtung der Tragflächen gesehen, die Auflegefläche der Lade sich in einer hinter den Tragflächen liegenden Ebene befindet. In dieser Ausführungsform braucht der Plattenträger nicht längs der Drehungsachse verschiebbar gelagert zu sein. Durch eine geeignete Führungskonstruktion für die Lade und die Bühne derselben kann eine Informationsplatte beim Verschieben der lade auf eine der Tragflächen des Plattenträgers gelegt bzw. derselben entnommen werden.

Eine weitere Ausführungsform, bei der der Plattenträger nicht längs der Drehungsachse verschiebbar ist, weist das kennzeichen auf, daß der Plattenteller der Abtasteinrichtung auf einem Hilfsrahmen angeordnet ist, der gegenüber dem Rahmen um eine sich parallel zu der Drehungsachse des Plattentellers erstreckende oder mit der Drehungsachse zusammenfallende Schwenkachse zur Verschiebung des Plattentellers zwischen der ersten und der zweiten Lage schwenkbar ist. Auf diese Weise ist ein gedrängtes Gefüge aus Plattenträger und Abtasteinrichtung möglich.

Eine Ausführungsform, mit der schnell Informationsplatten auf dem Plattenteller gewechselt werden können, weist das Kennzeichen auf, daß der Hilfsrahmen durch eine Einrichtungskupplung mit dem Plattenträger gekuppelt ist, wobei in einer ersten Drehrichtung der elektrischen Einheit der Positionierungseinrichtung der Plattenträger in einer ersten Drehrichtung bei am Platz gehaltenem Plattenteller verschiebbar ist und wobei in einer zweiten Drehrichtung der elektrischen Einheit der Plattenträger zusammen mit dem Plattenteller in einer zweiten Drehrichtung verschiebbar ist, wobei der Plattenteller zugleich in einer Richtung parallel zu der Drehungsachse verschiebbar ist.

Eine Ausführungsform, mit der beim Abtasten einer Informationsplatte mehrere Informationsplatten gewechselt werden können, weist das Kennzeichen auf, daß der Plattenteller der Abtasteinrichtung auf einem verschiebbaren Hilfsrahmen angeordnet ist, der gegenüber der ortsfesten Drehungsachse des Plattenträgers verschiebbar ist. Der Hilfsrahmen ist dabei vorzugsweise auf einem in dem Rahmen gelagerten Schlitten befestigt, der gegenüber der ortsfesten Drehungsachse des Plattenträgers radial verschiebbar ist.

Eine Ausführungsform, bei der zwei Informationsplatten nahezu ununterbrochen nacheinander abgetastet werden können, weist das Kennzeichen auf, daß ein weiterer um eine weitere Drehungsachse drehbarer und auf einem weiteren Schlitten angeordneter Plattenteller vorhanden ist, wobei die beiden Schlitten zum in die Abtastlage Bringen von Informationsplatten gegenüber dem Plattenträger und gegenüber einander verschiebbar sind.

Ausführungsbeispiele der Erfindung sind in der Zeichnung dargestellt und werden im folgenden näher beschrieben. Es zeigen:

Fig. 1 eine schematische und schaubildliche Darstellung eines Teils einer ersten Ausführungsform des erfindungsgemäßen Plattenspielers,

Fig. 2 einen Schnitt durch eine erste Ausführungsform,

Fig. 3 eine Explosionsansicht eines Konstruktionsteils der Ausführungsform nach Fig. 1,

Fig. 4 eine schematische und schaubildliche Ansicht einer zweiten Ausführungsform des erfindungsgemäßen Plattenspielers,

Fig. 5 eine schematische und schaubildliche Ansicht einer dritten Ausführungsform des erfindungsgemäßen Plattenspielers,

Fig. 6 eine Explosionsansicht eines Konstruktionsteils der Ausführungsform nach Fig. 5,

Fig. 7A einen Schnitt durch einen zweiten Konstruktionsteil der Ausführungsform nach Fig. 5 bei herausgefahrener Lade und

Fig. 7B einen Schnitt durch den zweiten Konstruktionsteil der Ausführungsform nach Fig. 5 bei hineingefahrener Lade.

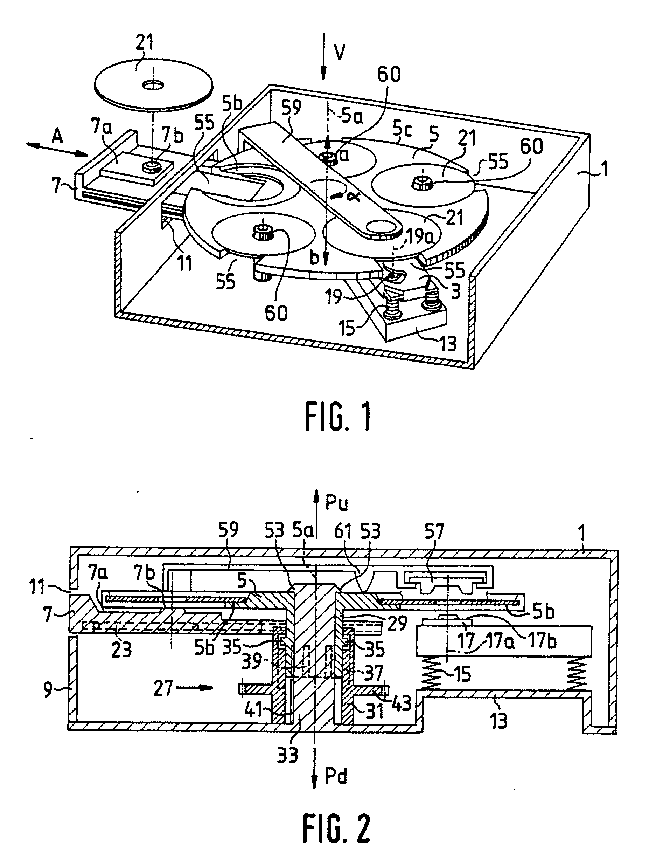

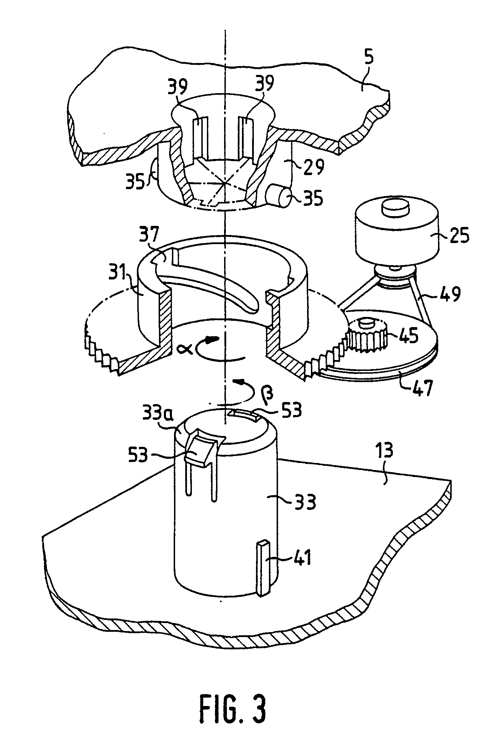

Der in den Fig. 1, 2 und 3 dargestellte, gut herstellbare erfindungsgemäße Plattenspieler weist ein Gehäuse 1, eine Abtasteinrichtung 3, einen Plattenträger 5 und eine Ladevorrichtung mit einer Lade 7 auf. In dem Gehäuse 1, das auf der Vorderseite 9 mit einer schlitzförmigen Durchführungsöffnung 11 versehen ist, ist ein ortsfester Rahmen 13 vorgesehen, der in diesem Beispiel zugleich den Boden des Gehäuses bildet. Die Abtasteinrichtung 3 ist mittels geeigneter Feder- und Dämpfungsmittel 15 auf dem Rahmen 13 angeordnet und kann von einem Typ sein, wie dieser in der US Patentschrift 4,679,185 (PHN 11.356; durch Bezeichnung als hierin aufgenommen betrachtet) beschrieben ist. Die Abtasteinrichtung 3 ist mit einem Plattenteller 17 und einer optischen Abtasteinheit 19 versehen. Der Plattenteller 17 ist um eine Drehungsachse 17a drehbar und mit einer Tragfläche 17b zum Tragen einer optischen Platte 21 versehen. Die optische Abtasteinheit 19 bildet einen Teil einer Schwenkarmvorrichtung und weist ein längs einer optischen Achse 19a verschiebbares Linsensystem auf.

Die Lade 7 ist entsprechend dem gezeichneten Doppelpfeil geradlinig in und aus dem Gehäuse 1 verschiebbar, wobei eine an sich bekannte Kulissenführung 23 angewandt sein kann. Die Lade 7 ist mit einer Auflegefläche 7a und einem Zentriernokken 7b zum definierten Auflegen einer optischen Platte 21 versehen.

Der Plattenträger 5 ist scheibenförmig ausgebildet, um eine Drehungsachse 5a drehbar und längs der Drehungsachse 5a gegenüber dem Rahmen 13 geradlinig verschiebbar. Zum Durchführen von Drehbewegungen sowie von geradlinigen Bewegungen des Plattenträgers 5 ist der Plattenspieler mit einer Positionierungseinrichtung mit einer elektrischen Antriebseinheit 25 und einem Hebemechanismus 27 versehen. Der Hebemechanismus 27 umfaßt zwei koaxiale Teile, von denen ein erster Teil 29 als Nabe ausgebildet ist und mit dem Plattenträger 5 ein Ganzes bildet, und von denen ein zweiter Teil 31 als Büchse ausgebildet ist, die um eine an dem Rahmen 13 befestigte Spindel 33 drehbar angeordnet ist. Die Nabe 29 ist mit zwei radial herausragenden, entgegengesetzt gerichteten Stiften 35 versehen, die in einer sich spiralförmig erstreckenden Rille 37 in der Büchse 31 stecken. Die Nabe 29 ist weiterhin auf der Innenseite mit sich axial erstreckenden Nuten 39 zum Zusammenarbeiten mit einem auf der Außenseite der Spindel 33 angeordneten Positionierungsnocken 41 versehen. Die Büchse 31 ist mit einem Zahnkranz 43 versehen, der mit einem Ritzel 45 eines Getriebes im Eingriff ist. Das Ritzel 45 ist auf einer Riemenscheibe 47 befestigt, die über einen Riemen 49 mit einer Antriebsscheibe 51 der elektrischen Antriebseinheit 25 verbunden ist. Die ortsfeste Spindel 33 ist in der Nähe des Endes 33a mit zwei Verriegelungsfederzungen 53 versehen, welche die axiale Verschiebung des Plattenträgers 5 in Aufwärtsrichtung, in Fig. 2 durch den Pfeil Pu bezeichnet, begrenzen.

Der Plattenträger 5 ist in diesem Beispiel mit fünf in einer Ebene liegenden Tragflächen 5b versehen, wodurch maximal 5 Platten 21 auf dem Plattenträger 5 vorhanden sein können. An der Stelle der Tragflächen 5b ist der Plattenträger 5 mit sich gegenüber der Drehungsachse 5a radial erstreckenden Öffnungen 55 versehen, die sich in diesem Beispiel bis an den Umfangsrand 5c des Plattenträgers 5 erstrecken.

Der erfindungsgemäße Plattenspieler ist weiterhin mit einem Plattendrücker 57 versehen zum Festklemmen einer optischen Platte 21 auf dem Plattenteller 17 während des Abtastens. Der Plattendrücker 57 ist an einem gelenkigen Tragarm 59 befestigt, der mit einem Nocken 61 auf dem Plattenträger 5 ruhen kann.

In bezug auf die Wirkung des in den Fig. 1, 2 und 3 dargestellten Plattenspielers sei folgendes bemerkt. In Fig. 1 befindet sich die Lade 7 in einer teilweise hineingefahrenen Lage, wobei die Tragflächen 5b des Plattenträgers 5 sich in einer ersten Ebene befinden. Diese Ebene befindet sich in der Richtung der Drehungsachse und in der Richtung der Tragflächen 5b gesehen, d.h. nach dem in Fig. 1 dargestellten Pfeil V, hinter der Auflegefläche 7a der Lade 7. Der Plattenträger 5 ist dabei derart gegenüber der Lade 7 ausgerichtet, daß eine der Tragflächen 5b sich genau unter der Bewegungsbahn der Auflegefläche 7a befindet. In dieser Lage des Plattenträgers 5 befindet sich der Nocken 41 in einer der Nuten 39.

Nachdem die Lade von Hand oder mit Hilfe eines Elektromotors völlig in das Gehäuse 1 hineingefahren ist, wobei die Lade eine Lage einnimmt, wie diese in Fig. 2 dargestellt ist, kann die elektrische Antriebseinheit 25 zwecks Verschiebung des Plattenträgers 5 erregt werden. Die elektrische Einheit 25 startet dazu in einer definierten ersten Drehrichtung, wobei die Büchse 31 derart angetrieben wird, daß der Plattenträger 5 parallel zu der Drehungsachse in Aufwärtsrichtung a verschoben wird, wobei der Nocken 41 aus der Nabe 39 gleitet. Danach werden die Büchse 31 und der Plattenträger 5 bei fortschreitender Erregung der elektrischen Einheit 25 in eine Drehrichtung $\alpha$ gebracht. Während der vertikalen Verschiebung a nimmt eine der Tragflächen 5b des Plattenträgers die auf der Lade liegende Platte 21 mit. Am Ende der genannten vertikalen Verschiebung nimmt der Plattenträger eine Lage ein, wie diese in Fig. 2 dargestellt ist.

Mit Hilfe einer nicht dargestellten Programmiereinheit des Plattenspielers kann der Gebraucher angeben, welche Platten 21 oder welche Teile derselben abgetastet werden sollen. Mit Hilfe eines Mikroprozessors läßt sich diese Information einer Positionierungseinrichtung zuführen, von woraus die elektrische Antriebseinheit 25 gesteuert werden kann. Die elektrische Einheit 25 wird dabei solange erregt, daß infolge der Drehung $\alpha$ des Plattenträgers 5 eine selektierte Informationsplatte sich an der richtigen Stelle über dem Plattenteller 17 befindet. Daraufhin wird die elektrische Einheit 25 derart erregt, daß diese in der entgegengesetzten Richtung anläuft, wobei die Büchse 31 in eine Drehrichtung $\beta$ gebracht wird und der Plattenträger parallel zu der Drehungsachse in Abwärtsrichtung b gebracht wird, wobei Mittel Drehung des Plattentellers vermeiden, so daß die Tragflächen 5b sich in der Richtung des Pfeiles V gesehen, hinter der Tragfläche 17b des Plattentellers 17 befinden. Bei dieser Abwärtsbewegung wird die optische Platte 21 auf den Plattenteller gelegt und vom Plattendrücker 57 darauf festgeklemmt. Die auf diese Weise aufgelegte Informationsplatte 21 kann daraufhin abgetastet werden.

Die Tragflächen 5b sind derart über den Plattenträger 5 verteilt angebracht, daß in der Abtastlage einer Informationsplatte 21 eine der Tragflächen 5b sich derart gegenüber der Lade 7 befindet, daß diese beim Herausfahren bzw. Hineinfahren eine Informationsplatte aus dem Gehäuse herausschieben bzw. hineinschieben kann. Mit anderen Worten beim Abtasten einer optischen Platte kann eine andere Informationsplatte gewechselt werden. Wenn eine andere Informationsplatte abgetastet oder gewechselt werden soll, wird der Plattenträger 5 durch eine angepaßte Erregung der elektrischen Einheit 25 nacheinander in Aufwärtsrichtung a, in Drehrichtung $\alpha$ und in Abwärtsrichtung b verschoben.

Der Plattenspieler ist mit drei auf dem gestell 13 befestigten Sicherheitsstiften 60 mit einem freien Ende versehen, das in derselben Ebene liegt wie das freie Ende des Zentrierstiftes 76 der Lade 7. Die Stifte 60 dienen dazu, seitliche Bewegungen auf dem Plattenteller 5 liegender Platten bei einer etwaigen Kippung des Gehäuses 1 zu vermeiden.

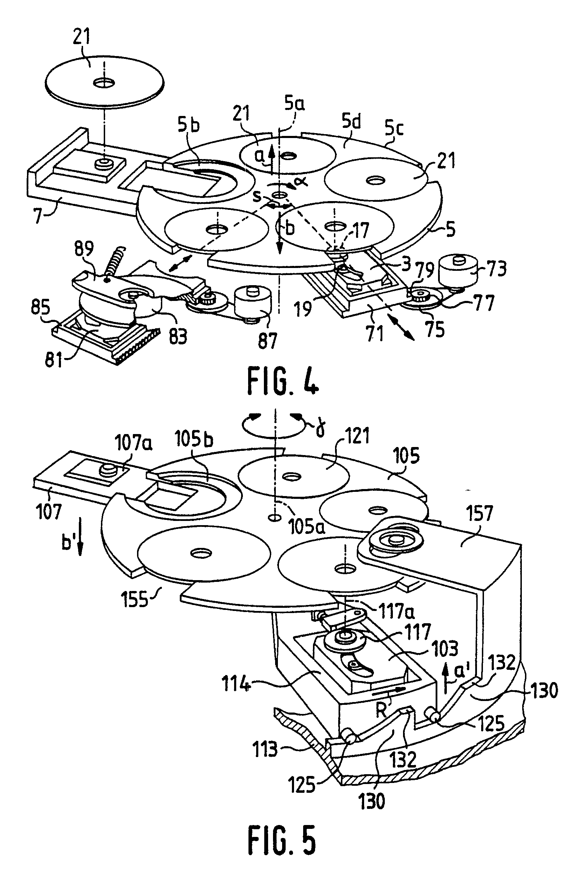

Die in Fig. 4 schematisch und teilweise dargestellte zweite Ausführungsform des erfindungsgemäßen Plattenspielers entspricht dem obenstehend beschriebenen Plattenspieler weitgehend. Aus diesem Grund werden für entsprechende Teile dieselben bezugszeichen benutzt. Der Plattenspieler ist mit einem längs einer Drehungsachse 5a verschiebbaren und um die Drehungsachse 5a drehbaren Plattenträger 5 versehen, der mit fünf Tragflächen 5b versehen ist. Auf den Tragflächen 5b, die gegenüber der oberen Fläche 5d etwas vertieft sind, können optische oder magnetooptische Platten 21 vorhanden sein, beispielsweise Compact Discs oder CD-Singles. Die Tragflächen können zum Tragen großer sowie kleiner Platten stufenförmig ausge bildet sein, wobei Teile der Tragflächen sich in einer ersten Ebene und andere Teile sich in einer zweiten Ebene erstrecken. Der Plattenspieler ist weiterhin mit einer Ladevorrichtung mit einer Lade 7, und mit einer optischen Abtasteinrichtung 3 mit einem Plattenteller und einer Abtasteinheit 19 versehen. Die Ladevorrichtung und die Abtasteinrichtung können der Ladevorrichtung bzw. der Abtasteinrichtung des Plattenspielers nach Fig. 1 entsprechen. Der Plattenspieler nach Fig. 4 ist zugleich mit einem Hebemechanismus und mit einer Positionierungseinrichtung versehen, die dem Hebemechanismus 27 bzw. der Positionierungseinrichtung des Plattenspielers nach Fig. 1 entsprechen.

Die Abtasteinrichtung 3 des Plattenspielers nach Fig. 4 ist auf einem als Schlitten 71 ausgebildeten Hilfsrahmen angeordnet. Der Schlitten 71 ist in dem Rahmen des Plattenspielers gelagert und ist gegenüber der Drehungsachse 5a zwischen der dargestellten Lage, in der durch eine abwärts gerichteten Bewegung b des Plattenträgers 5 eine Informationsplatte 21 auf den Plattenteller gelegt werden kann, und einer außerhalb des Umfangsrandes 5c des Plattenträgers 5 befindlichen Lage radial verschiebbar. Zwecks des linearen Antriebs des Schlittens 71 ist ein Elektromotor 73 mit einem Getriebe 75 vorgesehen, wobei das Getriebe 75 zum Zusammenarbeiten mit einer Zahnstange 79 des Schlittens 71 ein Ritzel 77 aufweist. Der Schlitten 71 ermöglicht es, beim Abtasten einer optischen Platte 21, den Plattenträger 5 zu verschieben, wobei der Plattenträger gedreht (Richtung $\alpha$) sowie geradlinig verschoben (Richtung a und b) werden kann. Dadurch können beim Abtasten maximal vier optische Platten gewechselt werden, wobei die Positionierungseinrichtung selbstverständlich mit geeigneten elektronischen Mitteln zur Ansteuerung versehen ist.

Der Plattenspieler nach Fig. 4 kann gewünschtenfalls mit einer weiteren Abtasteinrichtung 81 und einem weiteren Plattenteller 83 versehen sein, wobei die beiden Elemente auf einem weiteren Schlitten 85 angeordnet sind. Der Schlitten 85 kann eine der Verschiebung des Schlittens 71 entsprechenden linearen Verschiebung durchführen und wird von einem Elektromotor 87 angetrieben. Der Winkel S zwischen den beiden radialen Bahnen beträgt in diesem Beispiel 72°, was dem Wert 360° geteilt durch die Anzahl Tragflächen 5b des Plattenträgers entspricht. Mit einer derartigen Ausführung kann beim Abtasten einer optischen Platte 21, beispielsweise mit der Abtasteinrichtung 3, eine andere optische Informationsplatte 21 auf den Plattenteller der anderen optischen Einrichtung gelegt und in Abtastlage gebracht werden. Ein Vorteil dabei ist, daß die Informationsplatten nahezu pausenlos nacheinander abgetastet werden können.

Es sei bemerkt, daß in der in Fig. 4 dargestellten Ausführungsform jede Abtasteinrichtung mit einem eigenen Plattendrücker 89 zum gegen den Plattenteller Drücken einer optischen Platte versehen ist.

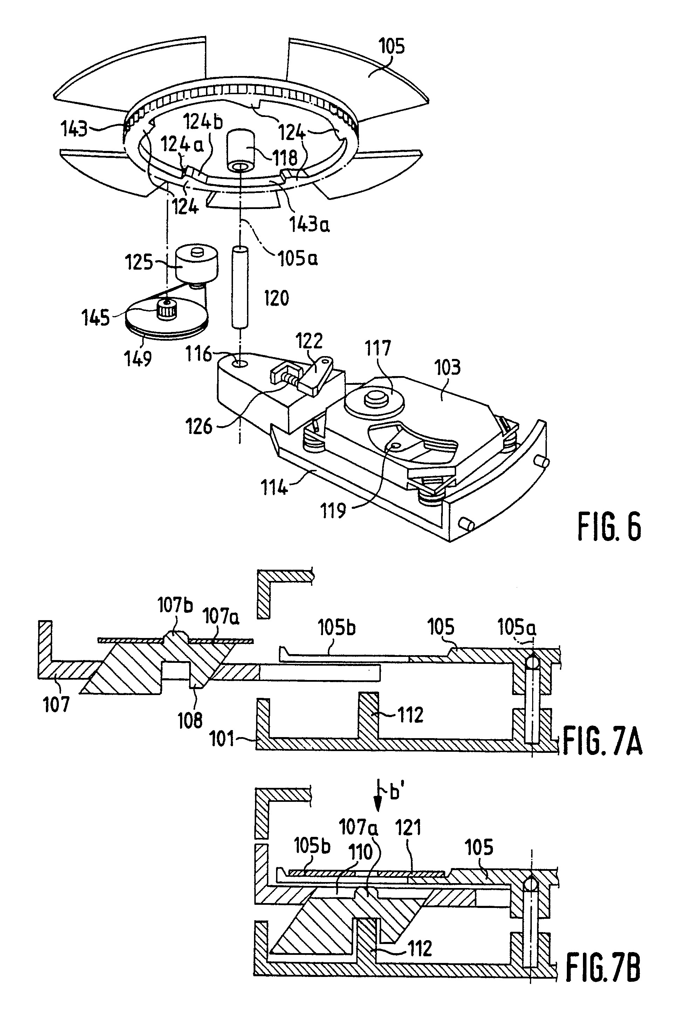

Die in den Fig. 5, 6, 7A und 7B dargestellte Ausführungsform des erfindungsgemäßen Plattenspielers ist mit einem Plattenträger 105 versehen, der gegenüber einem ortsfesten Rahmen 113 drehbar gelagert ist. Der um eine Drehungsachse 105a drehbare Plattenträger 105 ist mit fünf in einer Vertiefung befindlichen Tragflächen 105b zum Anbringen optischer Platten 121 versehen. Der Plattenträger 105 ist auf der Unterseite mit einem Zahnkranz 143 versehen, mit dem ein Ritzel 145 eines Getriebes 149 im Eingriff ist. Eine elektrische Antriebseinheit 125 ist mit dem Getriebe gekuppelt und sorgt für die Drehung des Plattenträgers 105. Der Plattenspieler weist weiterhin eine Ladevorrichtung mit einer Lade 107 auf, die mit einer Auflegefläche 107a versehen ist, auf die eine optische Platte 121 gelegt werden kann. Die Lade 107 ist gegenüber dem Gehäuse 101 des Plattenspielers zwischen einer herausgefahrenen Lage, wie in Fig. 7A dargestellt, und eine hineingefahrenen Lage, wie in Fig. 7B dargestellt, geradlinig verschiebbar. Die Auflegefläche 107a ist durch eine verschiebbare Bühne 108 gebildet, die in eine Öffnung 110 in der Lade 107 aufgenommen ist. Auf der Oberseite der Bühne 108 befindet sich ein Zentriernocken 107b zur zentrierten Auflegung der optischen Platte auf die Auflegefläche. Beim Hineinfahren der Lade 107 in das Gehäuse 101, wobei selbstverständlich eine der Tragflächen 105b des Plattenträgers 105

und die Auflegefläche 107a der Lade 107 radial fluchtend liegen, berührt zu einem bestimmten Zeitpunkt die Bühne 108 einen Anschlag 112, wobei die Buhne in Abwärtsrichtung (b') verschoben wird, bis die Lade 107 die in Fig. 7B dargestellte Lage einnimmt, wobei eine optische Platte 121 sich auf einer Tragfläche 105b des Plattenträgers 105 befindet und wobei die Auflegefläche sich in einer Ebene unterhalb der Tragflächen 105b erstreckt. Eine auf diese Weise auf den Plattenträger 105 gelegte Informationsplatte 121 kann durch eine geeignete Drehung (δ) des Plattenträgers einer Abtasteinrichtung 103 zugeführt werden.

Die Abtasteinrichtung 103 ist mit einem um eine Drehungsachse 117a drehbaren Plattenteller 117 sowie einem Objektiv 119 versehen. Die Abtasteinrichtung 103 ist auf einem gegenüber dem ortsfesten Rahmen 113 verschiebbaren Hilfsrahmen 114 befestigt. Der Hilfsrahmen 114 ist um die Achse 105a schwenkbar und ist dazu mit einer Lageröffnung 116 versehen, durch die ein in dem Rahmen 113 befestigter und mit einer Lagerbüchse 118 zusammenarbeitender Lagerstift 120 hindurchragt. Auf dem Hilfsrahmen 114 befindet sich eine Kupplungsklinke 122, die mit fünf Nocken 124 des Plattenträgers 105 eine Einrichtungskupplung bildet. Dazu sind die Nocken 124, die sich auf der Innenseite des Zahnkranzes 143 befinden, mit je einer Anschlagfläche 124a und einer Auflauffläche 124b versehen. Eine Feder 126 sorgt dafür, daß die Klinke 122 mit einer gewissen Kraft gegen die Innenseite 143a gedrückt wird. Der Hilfsrahmen 114 ist weiterhin zum Zusammenarbeiten mit Auflaufnocken 130 des Rahmens 113 mit radial herausragenden Stiften 128 versehen. Bei Drehung des Plattenträgers 105 in der Richtung τ stößt eine der Anschlagflächen 124a der Nocken 124 gegen die Klinke 122, wodurch der Hilfsrahmen 114 in eine Schwenkbewegung gemäß dem Pfeil R gebracht wird. Dabei gleiten die Stifte 128 über die Auflaufnocken 130, wobei der Hilfsrahmen 114, gleitend längs des Lagerstiftes 120, zugleich in Aufwärtsrichtung (a') verschoben wird. Dies alles ist derart bemessen und gegenüber einander ausgerichtet, daß am Ende der genannten Schwenkbewegung, wobei die Abtasteinrichtung 103 sich in einer Ausnehmung 155 an der Stelle einer Tragfläche 105b befindet. In der letztgenannten Lage befindet sich eine auf dem Plattenteller 117 liegende optische Platte 121 in der Abtastlage. Ein Plattendrücker 157 sorgt fürs Andrücken der optischen Platte gegen den Plattenteller 117.

Zum Zuführen einer optischen Platte zur Abtasteinrichtung 103 bzw. zur Ladevorrichtung wird der Plattenträger 105 in einer Richtung δ in Drehung versetzt, wobei der Hilfsrahmen 114 sich in der in Fig. 5 dargestellten Lage befindet bzw. in dieselbe gebracht wird, und wobei die Klinke 122 über die Auflaufflächen 124b läuft

Selbstverständlich beschränkt sich die Erfindung nicht auf die dargestellten Ausführungsbeispiele. Auch andere Ausführungsformen, beispielsweise diejenigen, bei denen der Plattenträger mit mehr oder mit weniger Tragflächen versehen ist, liegen im Rahmen der Erfindung. Weiterhin ist es möglich, bei Verwendung eines oder mehrerer Schlitten die Abtasteinrichtungen durch Verschiebungen parallel zu der Drehungsachse des Plattenträgers aus dem Bereich des Plattenträgers zu bringen.

**Ansprüche**

1. Plattenspieler, der die folgenden Elemente aufweist,
- ein Gehäuse mit einem in demselben vorhandenen ortsfesten Rahmen,
- eine Abtasteinrichtung zum Einschreiben und/oder Auslesen von Informationsplatten, insbesondere optischen oder magnetooptischen Platten, wobei diese Einrichtung mit einem um eine Drehungsachse drehbaren Plattenteller mit einer Auflegefläche zum Tragen einer in einer Abtastlage befindlichen Informationsplatte versehen ist,
- einen scheibenförmigen um eine Drehungsachse drehbaren Plattenträger mit einer Anzahl zum Tragen einer Informationsplatte eingerichteter Tragflächen,
- eine Ladevorrichtung mit einer durch eine Öffnung in dem Gehäuse verschiebbaren mit einer Auflegefläche versehenen Lade zum Hinein- bzw. Herausfahren von Informationsplatten,
- eine Positionierungseinrichtung mit einer elektrischen Antriebseinheit zum gegenseitigen Positionieren der Abtasteinrichtung und des Plattenträgers zum in die Abtastlage Bringen von Informationsplatten,
**dadurch gekennzeichnet** , daß der Plattenträger in dem ortsfesten Rahmen und ständig innerhalb des Gehäuses gelagert ist, wobei in einer eingefahrenen Lage der Lade die Tragflächen des Plattenträgers und die Auflegefläche der Lade in einer Richtung parallel zu der Drehungsachse des Plattenträgers gegenüber einander verschiebbar sind.
2. Plattenspieler nach Anspruch 1, **dadurch gekennzeichnet** , daß der Plattenspieler längs der Drehungsachse zwischen einer ersten Ebene, in der gemäß der Drehungsachse und in der Richtung der Tragflächen gesehen, die Tragflächen des Plattenträgers sich hinter der Auflegefläche der Lade befinden, und einer zweiten Ebene, in der, in derselben Richtung gesehen, die Tragflächen des Plattenträgers sich vor der Auflegefläche der Lade befinden, verschiebbar ist.
3. Plattenspieler nach Anspruch 1 oder 2, **dadurch**

**gekennzeichnet** , daß der Plattenträger längs der Drehungsachse zwischen einer dritten Ebene, in der, gemäß der Drehungsachse und in der Richtung der Tragflächen gesehen, die Tragflächen des Plattenträgers sich vor der Tragfläche des Plattentellers befinden, und einer vierten Ebene, in der, in derselben Richtung gesehen, die Tragflächen des Plattenträgers sich hinter der Tragfläche des Plattentellers befinden, verschiebbar ist.
4. Plattenspieler nach Anspruch 2 und 3, **dadurch gekennzeichnet** , daß die erste und die vierte Ebene fluchten und daß die zweite und dritte Ebene fluchten.
5. Plattenspieler nach Anspruch 1, 2, 3 oder 4, **dadurch gekennzeichnet** , daß zur gegenüber dem Rahmen parallelen Verschiebung des Plattenträgers ein durch eine elektrische Einheit der Positionierungseinrichtung antreibbarer Hebemechanismus vorhanden ist.
6. Plattenspieler nach Anspruch 5, **dadurch gekennzeichnet** , daß in einer ersten Drehrichtung der elektrischen Einheit der Plattenträger in einer ersten sich parallel zu der Drehungsachse erstreckenden Richtung sowie in einer ersten Drehrichtung verschiebbar ist, und in einer zweiten Drehrichtung der elektrischen Einheit der Plattenträger in einer zweiten sich parallel zu der Drehungsachse erstreckenden Richtung verschiebbar ist.
7. Plattenspieler nach Anspruch 5 oder 6, **dadurch gekennzeichnet** , daß der Hebemechanismus zwei gegenüber der Drehungsachse des Plattenträgers koaxiale Teile aufweist, von denen ein erster Teil einen Teil des Plattenträgers bildet und ein zweiter Teil drehbar um eine Spindel des Rahmens gelagert und mit der elektrischen Einheit gekuppelt ist, wobei die Teile untereinander gekuppelt und über eine schräge Fläche gegenüber einander verschiebbar sind.
8. Plattenspieler nach Anspruch 7, **dadurch gekennzeichnet** , daß einer der Teile des Hebemechanismus mit sich wenigstens nahezu parallel zu der Drehungsachse des Plattenträgers erstreckenden Nuten versehen ist und der andere Teil mit mindestens einem Kupplungsnocken zum Zusammenarbeiten mit den Nuten versehen ist.
9. Plattenspieler nach Anspruch 1, bei dem der Plattenteller verschiebbar ist zwischen einer ersten Lage, in der, gesehen in der Richtung der Drehungsachse sowie in Richtung der Tragfläche des Plattentellers, die Tragfläche des Plattentellers sich hinter den Tragflächen des Plattenträgers befindet, und einer zweiten Lage, in der, in derselben Richtung gesehen, die Tragfläche des Plattentellers sich vor den Auflegeflächen befindet, **dadurch gekennzeichnet** , daß die Lade der Ladevorrichtung mit einer, mindestens in einer Richtung quer zu der Auflegefläche der Lade verschiebbaren, die Auflegefläche aufweisenden Bühne versehen ist, wobei diese Bühne in einer herausgefahrenen Lage der Lade eine erste Lage einnimmt, in der, längs der Drehungsachse des Plattenträgers sowie in der Richtung der Tragflächen gesehen, die Auflegefläche der Lade sich in einer vor den Tragflächen liegenden Ebene befindet und wobei die Bühne in der hineingefahrenen Lage der Lade eine zweite Lage einnimmt, in der, längs der Drehungsachse des Plattenträgers und in der Richtung der Tragflächen gesehen, die Auflegefläche der Lade sich in einer hinter den Tragflächen liegenden Ebene befindet.

10. Plattenspieler nach Anspruch 9, **dadurch gekennzeichnet** , daß der Plattenteller der Abtasteinrichtung auf einem Hilfsrahmen angeordnet ist, der gegenüber dem Rahmen um eine sich parallel zu der Drehungsachse des Plattentellers erstreckende oder mit der Drehungsachse zusammenfallende Schwenkachse zur Verschiebung des Plattentellers zwischen der ersten und der zweiten Lage schwenkbar ist.

11. Plattenspieler nach Anspruch 10, **dadurch gekennzeichnet** , daß der Hilfsrahmen durch eine Einrichtungskupplung mit dem Plattenträger gekuppelt ist, wobei in einer ersten Drehrichtung der elektrischen Einheit von der Positionierungseinrichtung der Plattenträger in einer ersten Drehrichtung bei am Platz gehaltenem Plattenteller verschiebbar ist und wobei in einer zweiten Drehrichtung der elektrischen Einheit der Plattenträger zusammen mit dem Plattenteller in einer zweiten Drehrichtung verschiebbar ist, wobei der Plattenteller zugleich in einer Richtung parallel zu der Drehungsachse verschiebbar ist.

12. Plattenspieler nach Anspruch 11, **dadurch gekennzeichnet** , daß die Einrichtungskupplung eine der Anzahl Tragflächen des Plattentellers entsprechende Anzahl auf dem Plattenteller vorhandener Mitnehmernocken sowie ein mit diesen Nocken zusammenarbeitender auf dem Hilfsrahmen vorgesehener Klinkenmechanismus aufweist.

13. Plattenspieler nach Anspruch 10, 11 oder 12, **dadurch gekennzeichnet** , daß der Rahmen und der Hilfsrahmen mit miteinander zusammenarbeitenden Auflaufnocken versehen sind.

14. Plattenspieler nach einem der Ansprüche 1 bis 10, **dadurch gekennzeichnet** , daß der Plattenteller der Abtasteinrichtung auf einem verschiebbaren Hilfsrahmen angeordnet ist, der gegenüber der ortsfesten Drehungsachse des Plattenträgers verschiebbar ist.

15. Plattenspieler nach Anspruch 14, **dadurch gekennzeichnet** , daß der Hilfsrahmen auf einem in dem Rahmen gelagerten Schlitten befestigt ist, der gegenüber der ortsfesten Drehungsachse des Plattenträgers radial verschiebbar ist.

16. Plattenspieler nach Anspruch 14, **dadurch gekennzeichnet** , daß ein weiterer um eine weitere Drehungsachse drehbarer Plattenteller mit einer weiteren Tragfläche vorhanden ist, wobei, in der Umfangsrichtung des Plattenträgers gesehen, die gegenseitige Lage der beiden Plattenteller in einem Verhältnis zu den gegenseitigen Lagen der Tragflächen des Plattenträgers steht.

17. Plattenspieler nach Anspruch 15, **dadurch gekennzeichnet** , daß ein weiterer um eine weitere Drehungsachse drehbarer, auf einem weiteren Schlitten angeordneter Plattenteller vorhanden ist, wobei die beiden Schlitten zum in die Abtastlage Bringen von Informationsplatten gegenüber dem Plattenträger und gegenüber einander verschiebbar sind.

18. Plattenspieler nach Anspruch 15, **dadurch gekennzeichnet** , daß die Schlitten je über eine radiale Bahn gegenüber der Drehungsachse des Plattenträgers verschiebbar sind, wobei der Winkel zwischen den beiden radialen Bahnen $360/x°$ bzw. ein Vielfaches davon beträgt, wobei x der Anzahl Tragflächen des Plattenträgers entspricht.

19. Plattenspieler nach einem der vorstehenden Ansprüche, **dadurch gekennzeichnet** , daß der Plattenspieler an der Stelle der Tragflächen mit gegenüber der Drehungsachse sich radial und bis an den Umfangsrand des Plattenträgers erstreckenden Ausnehmungen versehen ist.

EP 0 406 950 A1

FIG. 1

FIG. 2

9

FIG. 3

**FIG. 4**

**FIG. 5**

FIG. 6

FIG. 7A

FIG. 7B

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| A | US-A-4670866 ( KAZUO HASEGAWA) * Spalte 2, Zeile 9 - Spalte 4, Zeile 60; Ansprüche 1, 2; Figuren * --- | 1, 14 | G11B17/22 |
| A | FR-A-2594588 (SONY) * Ansprüche 1-4; Figuren * & DE 3705007 (CAT.D,A ) --- | 1 | |
| A | US-A-4527264 (S. D,ALAYER DE COSTEMORE) * Spalte 2, Zeile 9 - Spalte 3, Zeile 16; Anspruch 3; Figuren * --- | 2-11 | |
| A | PATENT ABSTRACTS OF JAPAN vol. 7, no. 38 (P-176)(1183) 16 Februar 1983, & JP-A-57 189372 (NIPPON DENSHIN DENWA KOSHA) 20 November 1982, * das ganze Dokument * --- | 1, 15, 19 | |
| A | WO-A-8504510 (DE FAY) * Seite 15, Zeile 28 - Seite 17, Zeile 18; Figuren * --- | 1 | RECHERCHIERTE SACHGEBIETE (Int. Cl.5 ) |
| A | PATENT ABSTRACTS OF JAPAN vol. 13, no. 175 (P-863)(3523) 25 April 1989, & JP-A-1 7362 (MATSUSHITA) 11 Januar 1987, * das ganze Dokument * --- | 1 | G11B |
| A | PATENT ABSTRACTS OF JAPAN vol. 12, no. 107 (P-686)(2954) 07 April 1988, & JP-A-62 239375 (MITSUBISHI) 20 Oktober 1987, * das ganze Dokument * ----- | 1 | |

Der vorliegende Recherchenbericht wurde für alle Patentansprüche erstellt

| Recherchenort | Abschlußdatum der Recherche | Prüfer |
|---|---|---|
| DEN HAAG | 09 AUGUST 1990 | SCHWANDER |